# EUROPEAN PATENT APPLICATION

(11) **EP 1 720 288 A1**
(43) Date of publication of application: **08.11.2006**
(21) Application number: 05009615.5
(22) Date of filing: 02.05.2005
(51) Int. Cl.: H04L 12/28

(54) **A mobile communication network and a method for extending a transmission range of the mobile communication network**

(71) Applicant: Infineon Technologies AG, 81669 München (DE)
(72) Inventor: Runaker, Björn, 16354 Spanga (SE)
(74) Representative: Epping - Hermann - Fischer

(57) **Abstract**

The present invention relates to a communication network (10) comprising a wireless local area network (12) with a number n of access points (14₁, ..., 14ₙ), wherein n is an integer, and n ≥ 2. The communication network (10) comprises a number m of clients (16₁, ..., 16ₘ), wherein m is an integer, and m ≥ 2. The communication network (10) is operable to extent the range of the wireless local area network (12). Each of the clients (16₁, ..., 16ₘ) is operable to switch between a first mode in which the client (16₁, ..., 16ₘ) is connected to and exchanges packets with an access point (14₁, ..., 14ₙ) and a second mode in which the client (16₁, ..., 16ₘ) is not connected to any of the access points (14₁, ..., 14ₙ). A client (16ₓ) located outside the coverage of any of the access points (14₁, ..., 14ₙ) and requesting to be connected to the wireless local area network (12) is operable as an ad-hoc client (16ₓ) by making use of only the second mode. A client (16_{y}) located within the coverage of one of the access points (14₁, ..., 14ₙ) and the ad-hoc client (16ₓ), is operable as a repeater client (16_{y}) sharing its bandwidth with the ad-hoc client (16ₓ) by making use of both the first and the second mode.

## Description

### Technical field of the invention

The present invention relates to a communication network, such as a WLAN (wireless local area network) for extending a transmission range of the communication network.

The present invention also relates to a method for extending a transmission range of a communication network, such as a WLAN.

The present invention also relates to at least one computer program product for extending the range of a communication network.

### Description of related art

Wireless LAN (local area network) terminals are often mobile, and it is not always possible to plan the network to get coverage for all terminals.

Consequently, there exists a need for a solution to the above mentioned problem, without adding or changing higher level protocols which could hinder acceptance.

### Summary of the invention

It is an object of the present invention to solve the above mentioned problem.

According to the present invention there is provided a system comprising a wireless local area network (WLAN) with a number n of access points, wherein n is an integer, and n ≥ 2. The system comprises a number m of clients, wherein m is an integer, and m ≥ 2. The system is operable to extend the range of the wireless local area network. Each of the clients is operable to switch between a first mode in which the client is connected to and exchanges packets with an access point, and a second mode in which the client is not connected to any of the access points. A client located outside the coverage of any access point, and requesting to be connected to the wireless local area network is operable as an ad-hoc client by making use of only the second mode. A client located within the coverage of both one of the access points and the ad-hoc client, is operable as a repeater client sharing its bandwidth with the ad-hoc client by making use of both the first and second mode.

The main advantage with the system according to the present invention is that the functionality to WLAN terminals is increased without major redesigns. Another advantage is that no changes need to be done to the access points. A yet further advantage is that the solution is achieved without adding or changing higher level protocols.

A further advantage in this context is achieved if each client comprises a storage device operable to store queued packets.

Furthermore, it is an advantage in this context if said repeater client, when operating in said first mode, is operable to transmit said queued packets received from said ad-hoc client to one of said access points, and to receive said packets from one of said access points destined for said ad-hoc client.

A further advantage in this context is achieved if said repeater client, when operating in said second mode, is operable to be connected to said ad-hoc client and to exchange all said queued packets.

Furthermore, it is an advantage in this context if said repeater client, when switching from said first mode to said second mode, is operable to signal a power save mode to one of said access points, whereby one of said access points is operable to queue packets destined for said repeater client while it is operating in said second mode.

A further advantage in this context is achieved if said communication network also comprises a local server means, whereby all network applications are terminated to said local server means.

Furthermore, it is an advantage in this context if a network stack of said communication network is modified.

A further advantage in this context is achieved if said ad-hoc client is operable to handle a transition from said first mode to said second mode in a transparent way.

The present invention also provides a method for extending the transmission range of a communication network, comprising a wireless local area network with a number n of access points, wherein n is an integer, and n ≥ 2. The communication network comprises a number m of clients, wherein m is an integer, and m ≥ 2. Each of the clients is operable to switch between a first mode in which the client is connected to and exchanges packets with an access point, and a second mode in which the client is not connected to any access point. The method comprises the steps of:
- requesting to be connected to said wireless local area network for a client outside the coverage of any of said access points:
- handling said client to be operable as an ad-hoc client by making use of only said second mode; and
- handling a client, which is located within the coverage of one of said access points and said ad-hoc client, to be operable as a repeater client sharing its bandwidth with said ad-hoc client by making use of both said first and said second mode.

The main advantage with the method according to the present invention is that the functionality to WLAN terminals is increased without major redesigns. Another advantage is that no changes need to be done to the access points. A yet further advantage is that the solution is achieved without adding or changing higher level protocols.

A further advantage in this context is achieved if each of the clients comprises a storage device operable to store queued packets, and said method comprises the following steps of:
- transmitting said first queued packets received from said ad-hoc client to one of said access points via said repeater client, when said repeater client operates in said first mode; and
- receiving said queued packets from one of said access points destined for said ad-hoc client by said repeater client.

A further advantage in this context is achieved if said method comprises the step of:
- connecting said repeater client, when operating in said second mode, to said ad-hoc client and exchanging all said queued packets.

Furthermore, it is an advantage in this context if said method comprises the steps of:
- signalling a power save mode for said repeater client to one of said access points, when said repeater client is switched from said first mode to said second mode, and
- queuing packets destined for said repeater client in one of said access points, while said repeater client is operating in said second mode.

Furthermore, it is an advantage in this context if said system comprises a local server means, and said method comprises the step of:
- terminating all network applications to said local server means.

A further advantage in this context is achieved if said method comprises the step of:
- modifying a network stack of said system with time-out parameters modified.

Furthermore, it is an advantage in this context if said method comprises the step of:
- handling, for said ad-hoc client, a transition from said first mode to said second mode in a transparent way.

According to the present invention at least one computer program product is provided for extending the range of a wireless local area network (WLAN). The at least one computer program product is directly loadable into an internal memory of at least one computer. The product comprises software code portions for performing the steps of the method when the at least one product is run on the at least one computer.

The main advantage with the computer program product according to the present invention is that the functionality to WLAN terminals is increased without major redesigns. Another advantage is that no changes need to be done to the access points. A yet further advantage is that the solution is achieved without adding or changing higher level protocols.

### Brief description of the drawings

Embodiments of the invention will now be described with reference to the accompanying drawings, in which:
Figure 1 is a block diagram of a communication network for extending a transmission range of a wireless local area network according to the present invention;
Figure 2 is a flow chart of a method for extending a transmission range of a wireless local area network according to the present invention; and
Figure 3 is a schematic diagram of some computer program products according to the present invention.

### Detailed description of embodiments

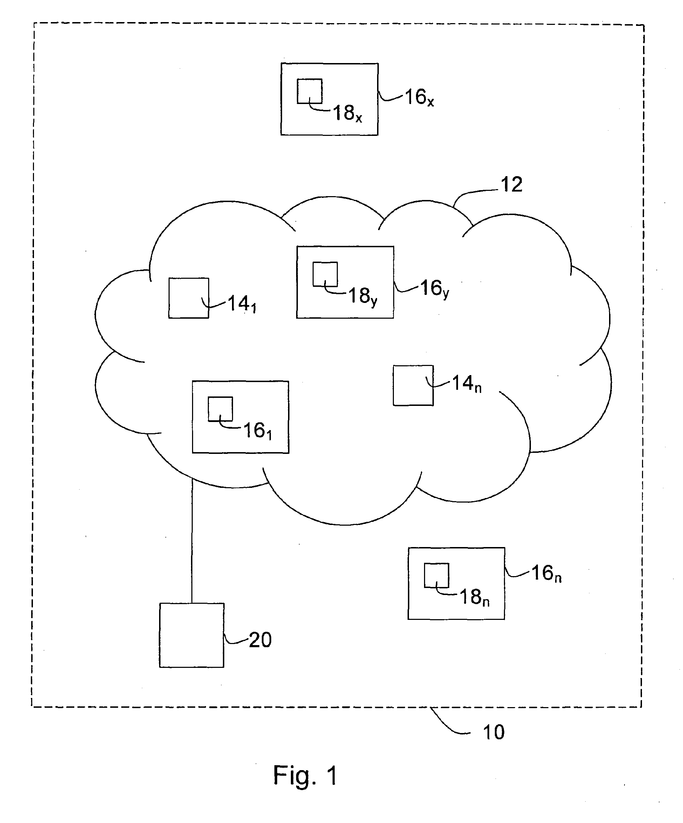

Figure 1 shows a block diagram of a communication network 10 according to the present invention. The communication network 10 comprises a wireless local area network (WLAN) 12 with a number n of access points 14₁, ..., 14ₙ, wherein n is an integer, and n ≥ 2. The communication network 10 comprises a number m of clients, 16₁, ..., 16ₘ, wherein m is an integer, and m ≥ 2. The communication network 10 is operable to extend the transmission range of the wireless local area network 12. Each of the clients 16₁, ..., 16ₘ, is operable to switch between a first mode in which one of the clients 16₁, ..., 16ₘ is connected to and exchanges packets with one of the access points 14₁, ..., 14ₙ, and a second mode in which one of the clients 16₁, ..., 16ₘ is not connected to any of the access points 14₁, ..., 14ₙ. A client 16ₓ outside the coverage of any access point 14₁, ..., 14ₙ (in figure 1, the access point 14₁) and requesting to be connected to the wireless local area network 12 is operable as an ad-hoc client 16ₓ by making use of only the second mode. A client 16_{y} located within the coverage of any of the access points 14₁, ..., 14ₙ (in figure 1, the access point 14₁) and the ad-hoc client 16ₓ, is operable as a repeater client 16_{y} sharing its bandwidth with the ad-hoc client 16ₓ by making use of both the first and the second mode. In this way the range of the wireless local area network 12 is extended. As illustrated in figure 1, each of the clients 16₁, ..., 16ₘ comprises a storage device 18₁, ..., 18ₘ operable to store queued packets. The communication network 10 comprises a local server means 20, connected to the wireless local area network 12 whereby all network applications are terminated to the local server means 20.

The repeater client 16_{y}, when operating in the first mode, is operable to transmit the queued packets received from the ad-hoc client 16ₓ to the access point 14₁, and to receive the packets from the access point 14₁ destined for the ad-hoc client 16ₓ.

The repeater client 16_{y}, when operating in the second mode, is operable to be connected to the ad-hoc client 16ₓ and to exchange all the queued packets.

The repeater client 16_{y*}, when switching from the first mode to the second mode, is operable to signal a power save mode to the access point 14₁ and is operable to queue packets destined for the repeater client 16_{y}, while the repeater client 16_{y} is operated in the second mode.

A network stack (not disclosed in figure 1) of the communication network 10 is modified with time-out parameters.

The ad-hoc client 16ₓ is operable to handle a transition from the first mode to the second mode in a transparent way.

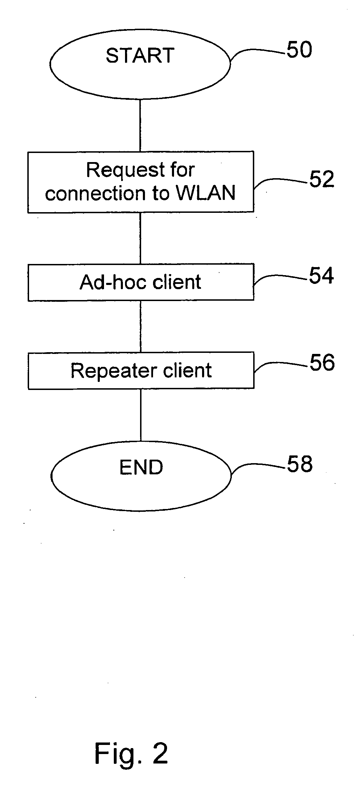

Figure 2 illustrates a flowchart of a method for extending the range of a wireless local area network (WLAN) 12 (see figure 1) according to the present invention. The method is performed with the aid of a communication network 10 comprising the wireless local are a network 12 with a number n of access points 14₁, ..., 14ₙ, wherein n is an integer, and n ≥ 2. The communication network 10 comprises a number m of clients 16₁, ..., 16ₘ, wherein m is an integer, and m ≥ 2. Each of the clients 16₁, ..., 16ₘ is operable to switch between a first mode in which one of the clients 14₁, ..., 14ₙ, is connected to and exchanges packets with one of the access points 14₁, ..., 14ₙ and a second mode in which one of the clients 16₁, ..., 16ₘ is not connected to any of the access points 14₁, ..., 14ₙ. The method begins at block 50. The method continues, at block 52. A client 16ₓ (see figure 1) outside the coverage of any of the access points 14₁, ..., 14ₙ, requests to be connected to the wireless local area network 12. Thereafter, the method continues at block 54. The client 16ₓ is operable as an ad-hoc client 16ₓ by making use of only the second mode. The method continues at block 56. A client 16_{y}, within the coverage of one of the access points 14₁, ..., 14ₙ, and the ad-hoc client 16ₓ, is operable as a repeater client 16_{y} sharing its bandwidth with the ad-hoc client 16ₓ by making use of both the first and the second mode. The method is completed at block 58. The method according to the present invention makes it possible to extend the transmission range of the wireless local area network.

Each of the clients 16₁, ..., 16ₘ comprises a storage device 18₁, ..., 18ₘ (see figure 1) operable to store queued packets. The repeater client 16_{y}, when operating in the first mode, transmits the queued packets from the ad-hoc client 16ₓ to one of the access points 14₁, ..., 14ₙ, receives the queued packets from one of the access points 14₁, ..., 14ₙ destined for the ad-hoc client 16ₓ.

The repeater client 16_{y}, when operating in the second mode, is connected to the ad-hoc client 16ₓ and exchanges all the queued packets.

The repeater client 16_{y}, when switching from the first mode to the second mode, signals a power save mode to one of the access points 14₁, ..., 14ₙ. The access point 14₁, ..., 14ₙ, queues packets destined for the repeater client 16_{y} while it is operating in the second mode.

The communication network 10 comprises a local server means 20. All network applications are terminated to the local server means 20.

A network stack of the communication network 10 is modified with time-out parameters modified.

The transition from the first mode to the second mode of the clients is handled in a transparent way.

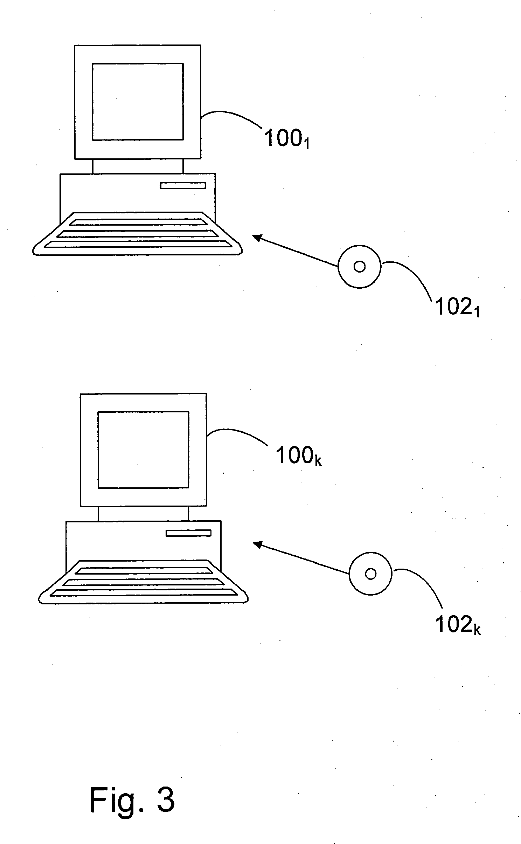

Figure 3 shows a schematic diagram of some computer program products according to the present invention for extending the transmission range of a wireless local area network 12 comprising k different digital computers 100₁, ...,100ₖ, wherein k is an integer, and k different computer program products 102₁, ..., 102ₖ, here shown in the form of compact discs. The different computer program products 102₁, ..., 102ₖ are directly loadable into the internal memory of the k different digital computers 100₁, ..., 100ₖ. Each of the computer program products 102₁, ..., 102ₖ comprises software code portions for performing some or all of the steps illustrated in figure 2 when the product(s) 102₁, ..., 102ₖ is/are run on said computer(s) 100₁, ..., 100ₖ. Said computer program products 102₁, ..., 102ₖ may be stored on floppy disks, RAM disks, magnetic tapes, opto magnetical disks or any other suitable products.

The invention is not limited to the embodiments described in the foregoing. It will be obvious that many different modifications are possible within the scope of the following claims.

### List of reference symbols

- 10: communication network
- 12: local area network
- 14: access point
- 16: client
- 18: storage device
- 20: local server means
- 100: computer
- 102: computer program product

## Claims

1. A communication network (10) comprising a wireless local area network (12), said local area network (12) comprising a number n of access points, (14₁, ..., 14ₙ), wherein n is an integer, and n ≥ 2, and a number m of clients (16₁, ..., 16ₘ), wherein m is an integer, and m ≥ 2, wherein said communication network (10) is operable to extend a range of said wireless local area network (12), **characterized in that** each of said clients (16₁, ..., 16ₘ) is operable to switch between a first mode in which each of said clients (16₁, ..., 16ₘ) is connected to and exchanges packets with one of said access points (14₁, ..., 14ₙ) and a second mode in which each of said clients (16₁, ...; 16ₘ) is not connected to any of said access points (14₁, ..., 14ₙ), wherein a client (16ₓ) which is located outside the coverage of any of said access points (14₁, ...; 14ₙ) and requests to be connected to said wireless local area network (12) is operable as an ad-hoc client (16ₓ) by making use of only said second mode, and a client (16y), which is located within the coverage of any of said access points (14₁, ..., 14ₙ) and said ad-hoc client (16ₓ), is operable as a repeater client (16_{y}) sharing its bandwidth with said ad-hoc client (16ₓ) by making use of both said first and said second mode.

2. The communication network (10) according to claim 1, **characterized in that** each of said clients (16₁, ..., 16ₘ)comprises a storage device (18₁, ..., 18ₘ) operable to store queued packets.

3. The communication network (10) according to claim 2, **characterized in that** said repeater client (16_{y}), when operating in said first mode, is operable to transmit said queued packets received from said ad-hoc client (16ₓ) to one of said access points (14₁, ..., 14ₙ), and to receive packets from one of said access points (14₁, ..., 14ₙ) destined for said ad-hoc client (16ₓ).

4. The communication network (10) according to claim 2 or 3, **characterized in that** said repeater client (16_{y}), when operating in said second mode, is operable to be connected to said ad-hoc client (16ₓ) and to exchange said queued packets.

5. The communication network (10) according to any one of claims 2 - 4, **characterized in that** said repeater client (16_{y}), when switching from said first mode to said second mode, is operable to signal a power save mode to one of said access points (14₁, ..., 14ₙ), whereby one of said access points (14₁, ..., 14ₙ) is operable to queue packets destined for said repeater client (16_{y}) while said repeater client is operating in said second mode.

6. The communication network (10) according to any one of claims 1 - 5, **characterized in that** said communication network (10) comprises a local server means (20), whereby all network applications are terminated to said local server means (20).

7. The communication network (10) according to any one of claims 1 - 6, **characterized in that** a network stack of said communication network (10) is modified with time-out parameters modified.

8. The communication network (10) according to any one of claims 1 - 7, **characterized in that** said ad-hoc client (16ₓ) is operable to handle a transition from said first mode to said second mode in a transparent way.

9. The method for extending a transmission range of a communication network (10), said communication network (10) comprising a wireless local area network (12) with a number n of access points (14₁, ..., 14ₙ), wherein n is an integer, and n ≥ 2, and a number m of clients (16₁, ..., 16ₘ), wherein m is an integer, and m ≥ 2, wherein each of said clients (16₁, ..., 16ₘ) is operable to switch between a first mode in which each of said clients (16₁, ..., 16ₘ) is connected to and exchanges packets with one of said access points (14₁ ..., 14ₙ), and a second mode in which each of said clients (16₁, ..., 16ₘ) is not connected to any of said access points (14₁, ..., 14ₙ), wherein said method comprises the steps of:
- requesting to be connected to said wireless local area network (12) for a client (16ₓ) outside the coverage of any access point (14₁, ..., 14ₙ);
- handling said client (16ₓ), to be operable as an ad-hoc client (16ₓ) by making use of only said second mode; and
- handling a client (16_{y}), which is located within the coverage of one of said access points (14₁, ..., 14ₙ) and said ad-hoc client (16ₓ), to be operable as a repeater client (16_{y}) sharing its bandwidth with said ad-hoc client (16ₓ) by making use of both said first and said second mode.

10. A method according to claim 9, **characterized in that** each of said clients (16₁, ..., 16ₘ) comprises a storage device (18₁, ..., 18ₘ) operable to store queued packets and said method comprises the steps of:
- transmitting said queued packets received from said ad-hoc client (16ₓ) to one of said access points (14₁, ..., 14ₙ) via said repeater client, when said repeater client operates in said first mode, and
- receiving said queued packets from one of said access points (14₁, ..., 14ₙ) destined for said ad-hoc client (16ₓ) by said repeater client.

11. A method according to claim 10, **characterized in that** said method comprises the step of:
- connecting said repeater client (16_{y}), when operating in said second mode, to said ad-hoc client (16ₓ) and to exchange said queued packets.

12. A method according to any one of claims 9 - 11, **characterized in that** said method comprises the steps of:
- signalling a power safe mode for said repeater client to one of said access points 14₁, ..., 14ₙ when said repeater client (16_{y}) is switched from said first mode to said second mode, and
- queuing packets destined for said repeater client (16_{y}) in one of said access points (14₁, ..., 14ₙ), while said repeater client is operating in said second mode.

13. A method according to any one of claims 9 - 12, **characterized in that** said communication network (10) comprises a local server means (20) and said method comprises the steps of:
- terminating all network applications to said local server means (20).

14. A method according to any one of claims 9 - 13, **characterized in that** said method comprises the step of:
- modifying a network stack of said communication network (10) with time-out parameters modified.

15. A method according to any one of claims 9 - 14, **characterized in that** said method comprises the step of:
- handling, for said ad-hoc client (16ₓ), a transition from said first mode to said second mode in a transparent way.

16. A computer program product (102₁, ..., 102ₖ) for extending the range of a wireless local area network (12), said at least one computer program product (102₁, ..., 102ₖ) being loadable into an internal memory of at least one computer product (100₁, ..., 100ₖ), comprising software code portions for performing the steps of claim 9, when said computer program product (102₁, ..., 102ₖ) is run on said at least one computer product (100₁, ..., 100ₖ).
